(19) Europäisches Patentamt
European Patent Office
Office européen des brevets

(11) Veröffentlichungsnummer: **0 071 897**
**B1**

(12) # EUROPÄISCHE PATENTSCHRIFT

(45) Veröffentlichungstag der Patentschrift:
**16.10.85**

(51) Int. Cl.⁴: **C 04 B 28/26, C 04 B 38/08, C 04 B 38/10, C 04 B 14/20**

(21) Anmeldenummer: **82106874.9**

(22) Anmeldetag: **30.07.82**

(54) **Leichtbaustoff sowie Verfahren zu seiner Herstellung.**

(30) Priorität: **08.08.81 DE 3131548**

(43) Veröffentlichungstag der Anmeldung:
**16.02.83 Patentblatt 83/7**

(45) Bekanntmachung des Hinweises auf die Patenterteilung:
**16.10.85 Patentblatt 85/42**

(84) Benannte Vertragsstaaten:
**AT BE CH DE FR GB IT LI LU NL SE**

(56) Entgegenhaltungen:
**DE - A - 2 813 745**
**DE - B - 2 745 750**
**DE - B - 2 813 473**
**US - A - 3 522 067**
**US - A - 4 263 048**

(73) Patentinhaber: **OTAVI MINEN AG, Hynspergstrasse 24, D-6000 Frankfurt/Main 18 (DE)**

(72) Erfinder: **Car, Martin, Dipl.-Ing., Kastanienstrasse 5, D-6464 Linsengericht-Grossenhausen (DE)**

(74) Vertreter: **Solf, Alexander, Dr. et al, Dr. Solf & Zapf Asamstrasse 8, D-8000 München 90 (DE)**

ACTORUM AG

## Beschreibung

Die Erfindung betrifft einen Leichtbaustoff, der geblähten Perlit als Zuschlagstoff und ein Bindemittelgerüst aus einem Alkalisilikat, vorzugsweise aus Wasserglas, z.B. Natrium-, Kalium-, Lithium-Wasserglas oder Guanidinsilikat, ein teilorganisches Wasserglas, aufweist. Die Erfindung betrifft ferner ein Verfahren zur Herstellung des Leichtbaustoffes.

Ein Leichtbaustoff, der geblähten Perlit als Zuschlagstoff und ein Bindemittelgerüst aus einem Alkalisilikat aufweist, ist aus der DE-B-2745750 bekannt. Zur Verhinderung von Ausblühungen werden den Mörtelmischungen zur Herstellung des Baustoffes Zusatzstoffe wie Borat von Zink, Calcium oder Magnesium oder ein Gemisch davon sowie Calciumnitrat, Calciumphosphat, Calciumorthophosphat oder ein Gemisch davon zugesetzt. Neben Perlit kann der bekannte Leichtbaustoff auch Blähton, Schaumglas, Vermiculit oder Kieselgurschaum enthalten.

Zudem sind aus der DE-A-2813473 Leichtbaustoffe mit gleichmässiger Porosität bekannt, die aus einem Gemisch einer wässrigen Alkalisilikatlösung und Aluminium- und/oder Siliciumpulver als porenbildendes Mittel sowie aktiven und ggf. inaktiven Stoffen in Gegenwart eines Expansionsreglers in Form eines Methylesters und/oder Propylencarbonats hergestellt werden. Als aktive Stoffe kommen Zement, Anhydrit oder gelöschter Kalk in Frage. Inaktive Stoffe können Kaoline, Tone, Bentonite, Kieselsäuren, Silicate, Gips, Tonerden, Carbonate und Flugaschen sein.

Aus der DE-AS 3001151 ist ein Verfahren zur Herstellung von vorwiegend leichten keramischen Erzeugnissen durch Verformen, Trocknen und Brennen einer keramischen Rohmasse aus Ton, Tonmineralien als Leichtzuschlagstoffe, Kunststoffteilchen und/oder Kunststoffhohlkörper, Wasserglas sowie ein Wasserglashärter bekannt, wobei die Leichtzuschlagstoffe das Wasserglas sowie der Wasserglashärter und die keramische Rohmasse getrennt in eine Form eingebracht werden, die Masse dann getrocknet und in üblicher Weise gebrannt wird. In diesem Fall wird die zusätzliche Porosität durch Ausbrennen von Kunststoffteilchen erzeugt. Beim Brennen der keramischen Masse werden aus den Kunststoffteilchen resultierende Gase freigesetzt, die bewältigt werden müssen.

Ferner ist aus der DE-OS 2948778 ein thermischer Isolierstoff mit einem selbsttragenden anorganischen Isolierschaumstoff, insbesondere in Form von Platten, gebildet aus einem unter Einwirkung von Wärme aufgeschäumten organischen Grundstoff, bekannt, bei dem das Schaumgerüst im wesentlichen aus unter Wärmeeinwirkung aufgeschäumtem Wasserglas besteht. Ein solcher Isolierstoff weist nur eine sehr geringe Festigkeit auf. Aus diesem Grunde ist gemäss der Lehre der Druckschrift vorgesehen, das Schaumgerüst auf eine Metallfolie selbsthaftend aufzuschäumen.

Aufgabe der Erfindung ist, einen Leichtbaustoff zu schaffen, der noch leichter ist als die bekannten Produkte.

Diese Aufgabe wird beim eingangs genannten Leichtbaustoff dadurch gelöst, dass in seiner Struktur Schaum- und/oder Blähporen im Bindemittelgerüst enthalten sind. Dadurch, dass man neben dem hochporösen Zuschlagstoff noch zusätzlich in der Struktur ein Porengefüge einbringt, entsteht ein Leichtbaustoff, der ein sehr viel niedrigeres Raumgewicht besitzt und dadurch leichter ist als die bekannten Produkte. Daraus resultieren besondere Vorteile wie insbesondere höhere Wärmedämmung und gute Handhabbarkeit bei grossen Formkörpern.

Vorzugsweise besitzt der neue Leichtbaustoff einen Porengehalt, der aus dem Porengefüge des Bindemittelgerüstes sowie des Leichtzuschlagstoffes resultiert, von 85 bis 99 Vol.-% sowie Raumgewichte von 40 bis 200 kg/m$^3$ und Festigkeiten von 0,01 bis 0,5 N/mm$^2$.

Ein Bedürfnis zur Herstellung des neuen Leichtbaustoffes, der die Vorteile des geblähten anorganischen Zuschlagstoffes mit den Vorteilen der Schaum- und/oder Blähstruktur des anorganischen oder teilorganischen Bindemittelgerüsts vereinigt, bestand schon lange Zeit. Alle Versuche scheiterten jedoch dadurch, dass die Schaum- und/oder Blähstruktur nicht dauerhaft entwickelt werden konnte, wenn als Bindemittel Wasserglas oder als Zuschlagstoff bei den bekannten Produkten Perlit verwendet wurden.

In überraschender Weise gelingt das Schäumen und/oder Blähen einer Mörtelmischung, bestehend aus einem Alkalisilikat, vorzugsweise aus Wasserglas, mit zweckmässigerweise 38° Bé als Bindemittel und geblähtem Perlit als Zuschlagstoff sowie einem an sich bekannten Härter für das Alkalisilikat, wenn der Mischung ein handelsübliches anionisches Tensid mit grenzflächenaktiven Eigenschaften, vorzugsweise ein Gemisch aus Alkansulfonat und Hydroxyalkensulfonat (Hostapur OS von der Firma Hoechst) oder ein α-Olefinsulfonat gemäss DE-PS 2056255, zugesetzt wird. Derartige Produkte werden in der Regel als Schäummittel in Spülmitteln, Wasch- und Reinigungsmitteln, in Shampoos, Schaumbädern, Textilhilfsmitteln, Lederhilfsmitteln u. a. verwendet.

Sehr gut geeignet ist auch «Arkopon», ein Produkt der Firma Hoechst, ein Natrium-Oleyltaurid. Dieses Produkt wird seit langem als Luftporenbildner für hydraulisch gebundene Mörtel eingesetzt.

Die Herstellung des erfindungsgemässen Leichtbaustoffes erfolgt vorzugsweise aus folgenden Mörtelmischungen:
70 bis 85 Vol.-% Perlit (Schüttgewicht von 20 bis 150 g/l, Körnung von 0 bis 6 mm)
23,0 bis 2,5 Vol.-% Wasserglas (38° Bé)
25,0 bis 5,0 Vol.-% Wasser
1,0 bis 0,10 Vol.-% Härter
2,0 bis 0,05 Vol.-% Luftporenbildner
Es hat sich in überraschender Weise gezeigt, dass die zusätzliche Wassermenge die Verschäumung günstig beeinflusst.

Zur Härtung des Wasserglases kann $K_2SiF_6$ verwendet werden; aber auch andere an sich bekannte anorganische, teilorganische und organische Härter sind beispielsweise verwendbar. In Frage kommt auch $CO_2$-Gas oder ein $CO_2$-abspaltender Stoff bzw. zweckmässigerweise auch die Einwirkung von Wärme, die ggf. den Schäumprozess fördert.

In den angegebenen Mörtelmischungen bilden die Luftporenbildner im Bindemittel ohne weiteres ein stabiles Porengefüge aus, das auch nach der Erhärtung des Baustoffes noch vorhanden ist. Die Wirkung der Luftporenbildner kann durch schonendes Rühren noch erhöht werden, wodurch eine höhere Ausbeute an Luftporen erzielt werden kann. Zusätzlich kann Luft oder ein anderes Gas eingeblasen werden.

Die Reaktion der Luftporenbildner war nicht zu erwarten, weil die Alkalisilikate der Schaumbildung dieser Produkte normalerweise entgegenwirken. Zur Herstellung geschäumter, Wasserglas, jedoch keine geblähten Zuschlagstoffe enthaltender Leichtbaustoffe ist daher vorgeschlagen worden, Aluminium- und/oder Siliciumpulver zu verwenden. Insoweit wird eine in eine völlig andere Richtung weisende Lehre erteilt, nämlich gasentwickelnde Stoffe zu verwenden. Demgegenüber war überraschend, dass die Kombination Perlit/anionisches Tensid die schaumdämpfende Wirkung des Alkalisilikats praktisch aufhebt. Der Grund für dieses ungewöhnliche Verhalten ist nicht bekannt.

Die folgenden Beispiele verdeutlichen die Herstellung des erfindungsgemässen Leichtbaustoffes.

### Beispiel 1

Es wurde ein Gemisch aus folgenden Produkten hergestellt:

| | |
|---|---|
| Perlit (0 bis 1 mm, etwa 50 g/l Schüttgewicht) | 1,5 l |
| Natronwasserglas (38° Bé) | 0,09 kg |
| Wasser | 0,30 kg |
| Härter ($K_2SiF_6$) | 0,0057 kg |
| Luftporenbildner (Arkopon) | 0,003 kg |

Das Gemisch wurde schonend etwa 2 bis 3 min gerührt, wobei der Schaum entstand. Anschliessend wurde die Masse in Ruhe gelassen, so dass sie in etwa 20 min verfestigt war. Die Ausbeute betrug 1,7 l und das Raumgewicht 70 kg/m³. Der Feststoff kann gebrochen werden und in Granulatform als Füllmaterial verwendet werden.

### Beispiel 2

Es wurde folgendes Gemisch hergestellt und wie in Beispiel 1 verarbeitet, wobei jedoch die Mörtelmasse vor der Verfestigung in eine quaderförmige Form gegeben wurde.

| | |
|---|---|
| Perlit (0 bis 1 mm, etwa 50 g/l Schüttgewicht) | 1,5 l |
| Natronwasserglas (38° Bé) | 0,281 kg |
| Wasser | 0,126 kg |
| Härter ($K_2SiF_6$) | 0,019 kg |
| Luftporenbildner (Arkopon) | 0,03 kg |

Die Ausbeute betrug 1,1 l, das Raumgewicht 152 kg/m³ und die Festigkeit 0,22 N/mm².

### Beispiel 3

Zur Erhöhung der Ausbeute wurde folgendes Gemisch erstellt und wie gemäss Beispiel 2 verarbeitet:

| | |
|---|---|
| Perlit (0 bis 1 mm, etwa 50 g/l Schüttgewicht) | 1,5 l |
| Natronwasserglas (38° Bé) | 0,225 kg |
| Wasser | 0,161 kg |
| Härter ($K_2SiF_6$) | 0,019 kg |
| Luftporenbildner (Arkopon) | 0,005 kg |

Die Ausbeute betrug 1,34 l, das Raumgewicht 120 kg/m³ und die Festigkeit 0,15 N/mm².

### Beispiel 4

Zum Vergleich wurde ein Gemisch ohne Tensid aus folgenden Stoffen hergestellt:

| | |
|---|---|
| Perlit (0 bis 1 mm, etwa 50 g/l Schüttgewicht) | 1,5 l |
| Natronwasserglas (38° Bé) | 0,293 kg |
| Wasser | 0,183 kg |
| Härter ($K_2SiF_6$) | 0,025 kg |

Die Ausbeute betrug 0,47 l, das Raumgewicht 300 kg/m³ und die Festigkeit 0,25 N/mm².

Die Beispiele 1 bis 3 verdeutlichen, dass z.T. Formkörper mit guter Festigkeit herstellbar sind. Die Masse kann aber auch nach dem Mischen in Hohlräume verfüllt werden und dort in situ erstarren und eine ausgezeichnete Wärmeisolation bilden. Zudem kann auch aus der verfestigten Masse gemäss Beispiel 1 ein Granulat hergestellt werden, das als wärmedämmendes Füllmaterial verwendet ist.

Der Zuschlagstoff kann erfindungsgemäss teilweise durch andere hochporöse Zuschlagstoffe wie z.B. Vermiculit, Blähton, Schaumglas, Leichtbims und Pumicite oder dergleichen ersetzt werden.

Die Menge richtet sich dabei nach der Wirksamkeit des verbleibenden Restanteils des Perlits, der ja für das Schäumen und/oder Blähen verantwortlich ist.

Andere an sich bekannte Zuschlagstoffe wie Bentonit, Kaolin, Reisschalenasche, Schamotte, Wollastonit oder andere Calciumsilikate, Kyanit oder ähnliche feuerfeste hochtonerdehaltige Rohstoffe, Tonerdehydrate, Tonerden, Feldspäte, Feldspatvertreter, Gesteinskörnungen und -mehle (Basalte, Pegmatite od. dgl.), Quarzkörnungen und -mehle oder andere Kieselsäureprodukte mit hoher spezifischer Oberfläche sind ebenfalls verwendbar. Ebenso können hydraulische oder latent hydraulische natürliche oder synthetische Stoffe wie Zemente, hydraulische Kalke, Hüttensande, Trass, Puzzolane od. dgl. sowie Gips und Kalksteinmehl zugesetzt werden, wobei auch in diesem Fall gewährleistet bleiben muss, dass ausreichend Perlit zur Initiierung des Schäumens und/oder Blähens vorhanden ist.

Bei der Herstellung der Mischung kann der Zeitpunkt des Schäumens und/oder Blähens dadurch vorbestimmt werden, dass die Komponenten Wasserglas und Tensid getrennt zur Mischung gegeben werden. Man kann daher Vormischungen mit einem Reaktionspartner herstellen und den anderen Reaktionspartner zusetzen, wenn das Schäumen und/oder Blähen beginnen soll. Man kann aber auch zwei oder mehr Vormischungen herstellen, wobei die eine Vormischung den einen und die andere Vormischung den anderen Reaktionspartner enthält.

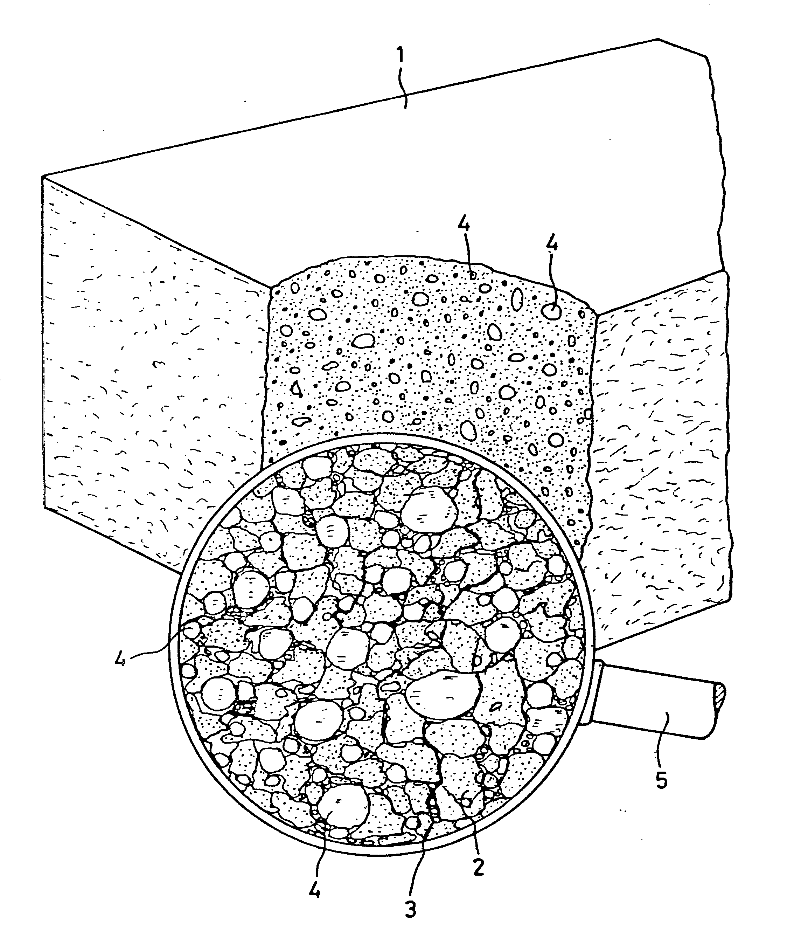

Anhand der Zeichnung wird die Struktur des erfindungsgemässen Leichtbaustoffes näher erläutert.

Der als Leichtbauplatte 1 angedeutete erfindungsgemässe Leichtbaustoff weist in seiner Struktur Perlitkörner 2 in dichter Schüttung auf, wobei die Perlitkörner durch das Bindemittelgerüst 3 miteinander verbunden sind. Daraus resultiert im wesentlichen die Festigkeit des Leichtbaustoffes. In der Struktur sind ferner Poren 4 vorhanden, die aus dem Blähprozess resultieren und deren Porenwandungen von der Bindemittelgerüstsubstanz gebildet werden. Diese Ausgestaltung der Struktur wird in der Zeichnung durch das schematische Bild der Lupe 5 verdeutlicht.

Der erfindungsgemässe Leichtbaustoff kann durch an sich bekannte reaktive und nicht reaktive Hydrophobierungsmittel (z. B. Methylpolysiloxane od. dgl., Silikonöle und Silikonharzemulsionen, Fettamine, Fettsäuren, Fettalkohole sowie Stearate) wasserabweisend gemacht werden.

Mit diesen bekannten Mitteln gelingt die Oberflächenhydrophobierung ohne weiteres. Die Verwendung der Mittel zur durchgehenden Hydrophobierung der gesamten Masse des Leichtbaustoffs – also auch im Kern – lag nicht ohne weiteres nahe, weil die Hydrophobierungsmittel den durch die Tenside bewirkten Aufbau der Schaumstruktur bekanntlich stören, wenn nicht gar verhindern. Es gelingt jedoch die Kernhydrophobierung erfindungsgemäss dadurch, dass das Hydrophobierungsmittel getrennt zugemischt wird, und zwar zu einem Zeitpunkt, zu dem die Schaumstruktur bereits voll ausgebildet ist und die Erhärtung des Leichtbaustoffs gerade beginnen will oder eingesetzt hat. Die Kernhydrophobierung bringt den überraschenden Vorteil, dass das an sich bekannte Ausblühen des Baustoffs (Salzkristallisation an der Oberfläche) vollkommen unterbunden werden kann.

## Patentansprüche

1. Leichtbaustoff, der geblähten Perlit als Zuschlagstoff und ein Bindemittelgerüst aus einem Alkalisilikat oder einem Guanidinsilikat aufweist, dadurch gekennzeichnet, dass in seiner Struktur Schaum- und/oder Blähporen im Bindemittelgerüst enthalten sind.

2. Leichtbaustoff nach Anspruch 1, dadurch gekennzeichnet, dass der Porengehalt, der aus dem Porengefüge des Bindemittelgerüsts sowie des Leichtzuschlagstoffs resultiert, von 85 bis 99 Vol.-% beträgt.

3. Leichtbaustoff nach Anspruch 1 und/oder 2, gekennzeichnet durch Raumgewicht von 40 bis 200 kg/m³.

4. Leichtbaustoff nach Anspruch 3, gekennzeichnet durch Festigkeiten von 0,01 bis 0,5 N/mm².

5. Leichtbaustoff nach einem oder mehreren der Ansprüche 1 bis 4, dadurch gekennzeichnet, dass er eine Hydrophobierung aufweist.

6. Leichtbaustoff nach Anspruch 5, dadurch gekennzeichnet, dass er eine Kernhydrophobierung aufweist.

7. Verfahren zur Herstellung insbesondere eines Leichtbaustoffes nach Anspruch 1 bis 6, dadurch gekennzeichnet, dass Mörtelmischungen folgender Zusammensetzung verwendet werden:
70 bis 85 Vol.-% Perlit (Schüttgewicht von 20 bis 150 g/l, Körnung von 0 bis 6 mm)
23,0 bis 2,5 Vol.-% Wasserglas (38° Bé)
25,0 bis 5,0 Vol.-% Wasser
1,0 bis 0,10 Vol.-% Härter
2,0 bis 0,05 Vol.-% Luftporenbildner.

8. Verfahren nach Anspruch 7, dadurch gekennzeichnet, dass in den Mörtelmischungen Perlit teilweise durch Vermiculit und/oder Blähton und/oder Schaumglas oder dergleichen ersetzt wird.

9. Verfahren nach Anspruch 7 und/oder 8, dadurch gekennzeichnet, dass der Mörtelmischung Bentonit und/oder Gips und/oder Kalkstein und/oder hydraulisch abbindende Produkte und/oder Schamotte und/oder hochtonerdehaltige Stoffe und/oder Tonerden und/oder Kieselsäuren hoher spezifischer Oberfläche zugesetzt werden.

10. Verfahren nach einem oder mehreren der Ansprüche 7 bis 9, dadurch gekennzeichnet, dass zur Aktivierung des Porenbildners die Mörtelmischung leicht gerührt wird.

11. Verfahren nach einem oder mehreren der Ansprüche 7 bis 10, dadurch gekennzeichnet, dass die Komponenten Wasserglas und Tensid getrennt zur Mischung gegeben werden.

12. Verfahren nach Anspruch 11, dadurch gekennzeichnet, dass Vormischungen mit einem Reaktionspartner hergestellt und der andere Reaktionspartner zugesetzt wird, wenn das Schäumen und/oder das Blähen beginnen soll.

13. Verfahren nach Anspruch 11 und/oder 12, dadurch gekennzeichnet, dass zwei oder mehr Vormischungen hergestellt werden, wobei die eine Vormischung den einen und die andere Vormischung den anderen Reaktionspartner enthält.

14. Verfahren nach einem oder mehreren der Ansprüche 7 bis 13, dadurch gekennzeichnet, dass der erhärtete Leichtbaustoff in an sich bekannter Weise oberflächig hydrophobiert wird.

15. Verfahren nach einem oder mehreren der Ansprüche 7 bis 13, dadurch gekennzeichnet, dass ein an sich bekanntes Hydrophobierungsmittel der geschäumten Masse, die eine bereits fertig ausgebildete Schaumstruktur aufweist, als separater Zusatzstoff zugesetzt und anschliessend in die Masse verteilt wird, worauf unmittelbar die Erhärtung erfolgt.

## Claims

1. Lightweight building material, which has blown perlite as an aggregate and a binding agent skeleton composed of an alkali silicate or a guanidine silicate, characterised in that in its structure, foaming and/or expanding pores are contained in the binding agent skeleton.

2. Lightweight building material as claimed in claim 1, characterised in that the pore content, which results from the pore structure of the binding agent skeleton and also of lightweight aggregate, is from 85 to 99% by volume.

3. Lightweight building material as claimed in claim 1 and/or claim 2, characterised by bulk densities of 40 to 200 kg/m$^3$.

4. Lightweight building material as claimed in claim 3, characterised by strengths of 0, 01 to 0,5 N/mm$^2$.

5. Lightweight building material as claimed in one or more of the claims 1 to 4, characterised in that it has a hydrophobic agent.

6. Lightweight building material as claimed in claim 5, characterised in that it has a hydrophobic agent at the core.

7. Process for production, especially of a lightweight building material as claimed in claim 1 to 6, characterised in that mortar mixtures of the following composition are used:
70 to 85% by vol. perlite (bulk density of 20 to 150 g/l, grain size of 0 to 6 mm)
23.0 to 2.5% by vol. water glass (38° Be)
25.0 to 5.0% by vol. water
1.0 to 1.10% by vol. hardener
2.0 to 0.05% by vol. air entrainment agents

8. Process as claimed in claim 7, characterised in that in the mortar mixture the perlite is partly replaced by vermiculite and/or expanded clay and/or foamed glass or the like.

9. Process as claimed in claim 7 and/or 8, characterised in that bentonite and/or gypsum and/or carbonate of lime and/or hydraulically hardening products and/or fireclay and/or substances with a high alumina content and/or aluminas and/or silicic acids of high specific surface are added to the mortar mixture.

10. Process as claimed in one or more of claims 7 to 9, characterised in that the mortar mixture is slightly agitated in order to activate the air entrainment agent.

11. Process as claimed in one or more of claims 7 to 10, characterised in that the components water glass and surface active agent are added separately to the mixture.

12. Process as claimed in claim 11, characterised in that pre-mixtures are manufactured with one interactive component and other interactive component is added when the foaming and/or expanding is intended to start.

13. Process as claimed in claim 11 and/or claim 12, characterised in that two or more pre-mixtures are manufactured, in which the one pre-mixture contains the one interactive component and the other pre-mixture contains the other interactive component.

14. Process as claimed in one or more of the claims 7 to 13, characterised in that the outside surfaces of hardened lightweight building material are water repellant in known «per se» manner.

15. Process as claimed in one or more of the claims 7 to 13, characterised in that a water repellant agent known «per se» is added a separate additive to the foamed mass, when it has an already completely formed foam structure, and is then distributed in the mass, whereupon hardening takes place immediately.

**Revendications**

1. Matériau de construction léger qui comporte de la perlite expansée en tant qu'agrégat et un système liant constitué d'un silicate alcalin ou d'un silicate de guaindine, caractérisé par le fait que des alvéoles de mousse et/ou d'expansion sont contenues, dans sa structure, dans le système liant.

2. Matériau de construction léger seon la revendication 1, caractérisé par le fait que la teneur en alvéoles, qui résulte de la structure alvéolaire du système liant ainsi que de l'agrégat léger est comprise entre 85 et 99% en volume.

3. Matériau de construction léger selon l'une des revendications 1 et 2, caractérisé par un poids spécifique compris entre 40 et 200 kg/m$^3$.

4. Matériau de construction léger selon la revendication 3, caractérisé par des résistances allant de 0,01 à 0,05 N/mm$^2$.

5. Matériau de construction léger selon l'une des revendications 1 à 4, caractérisé par le fait qu'il présente une imperméabilisation.

6. Matériau de construction léger selon la revendication 5, caractérisé que le fait qu'il présente une imperméabilisation à coeur.

7. Procédé pour la préparation en particulier d'un matériau de construction léger selon les revendications 1 à 6, caractérisé par le fait que l'on utilise des mélanges de mortier ayant la composition suivante:
de 70 à 85% en volume de perlite (poids de la matière non tassée compris entre 20 et 150 g/l, dimension de grains allant de 0 à 6 mm)
de 2,5 à 23% en volume de verre soluble (38° Bé)
de 5,0 à 2,5% en volume d'eau
de 0,10 à 1,0% en volume de durcisseur
de 0,05 à 2,0% en volume d'agent porogène.

8. Procédé selon la revendication 7, caractérisé par le fait que l'on remplace, dans les mélanges de mortier, en partie la perlite par de la vermiculite et/ou de l'argile expansée et/ou de la mousse de verre ou similaires.

9. Procédé selon l'une des revendications 7 et 8, caractérisé par le fait que l'on ajoute au mélange de mortier de la bentonite et/ou du gypse et/ou de la pierre à chaux et/ou des produits à prise hydraulique et/ou de la schamotte et/ou des matières extra-alumineuses et/ou des alumines et/ou des acides siliciques à surface spécifique élevée.

10. Procédé selon une ou plusieurs des revendications 7 à 9, caractérisé par le fait que, pour l'activation de l'agent porogène, le mélange de mortier est agité doucement.

11. Procédé selon une ou plusieurs des revendications 7 à 10, caractérisé par le fait que les composants verre soluble et tensio-actif sont ajoutés séparément au mélange.

12. Procédé selon la revendication 11, caractérisé par le fait que l'on prépare des mélanges préalables avec un corps participant à la réaction et que l'on ajoute l'autre corps participant à la réaction lorsque la transformation en mousse et/ou l'expansion doivent commencer.

13. Procédé selon la revendication 11 et/ou la revendication 12, caractérisé par le fait que l'on prépare deux ou plusieurs mélanges préalables, qui contiennent, un corps participant à la réaction, et l'autre, un autre de ces corps.

14. Procédé selon une ou plusieurs de revendications 7 à 13, caractérisé par le fait que le matériau de construction léger durci est rendu superficiellement hydrophobe d'une façon connue.

15. Procédé selon une ou plusieurs des revendications 7 à 13, caractérisé par le fait que l'on ajoute à la matière rendue alvéolaire, qui présente déjà une structure alvéolaire formée finie, en tant qu'additif, un agent imperméabilisant connu et qu'on le répartit ensuite dans la masse, le durcissement s'effectuant immédiatement après.